# EUROPEAN PATENT SPECIFICATION

(11) **EP 1 134 593 B1**
(45) Date of publication and mention of the grant of the patent: **14.01.2004**
(21) Application number: 01104807.1
(22) Date of filing: 27.02.2001
(51) Int. Cl.: G01S 13/82, G01S 13/93

(54) **Communication method for measuring distance between mobile bodies**
Telekommunikationsverfahren zur Abstandmessung zwischen mobilen Objekten
Procédé de communication pour la mesure de distance entre des objets mobiles

(30) Priority: 06.03.2000 JP 2000059814
(43) Date of publication of application: 19.09.2001
(73) Proprietor: Honda Giken Kogyo Kabushiki Kaisha, Minato-ku, Tokyo (JP)
(72) Inventor: Kushida, Kazumitsu, K. K. Honda Gijutsu Kenkyusho, Saitama (JP); Tabata, Hajime, K. K. Honda Gijutsu Kenkyusho, Saitama (JP)
(74) Representative: Liska, Horst, Dr.-Ing.

(56) References cited:
- EP-A- 0 964 380
- JP-A- 11 352 221
- MIZUI K ET AL: "VEHICLE-TO-VEHICLE COMMUNICATIONS AND RANGING SYSTEM USING SPREAD SPECTRUM TECHNIQUES" ELECTRONICS & COMMUNICATIONS IN JAPAN, PART I - COMMUNICATIONS,US,SCRIPTA TECHNICA. NEW YORK, vol. 79, no. 12, 1 December 1996 (1996-12-01), pages 106-115, XP000679210 ISSN: 8756-6621

## Description

The present invention relates to a communication method for measuring a relative distance between mobile bodies including vehicles and pedestrians by wireless means.

As communication methods for measuring a relative distance between mobile bodies, there are methods that use an extremely high frequency radar and a laser radar, and the like. However, it sometimes takes a long time in determination by a characteristic extraction algorithm, and the like, for judging whether a target is a fixed object such as a building or a mobile object such as a vehicle. High accuracy of the determination, therefore, cannot be expected.

Under such circumstance, another method was proposed (EP 0 964 380 A2 corresponding to Japanese Patent Application Laid-Open No. Hei 11-352221, and Japanese Patent Application Laid-Open No. Hei 11-352242), in which the object side also has a communication means and a relative distance is determined from a time difference between transmission and reception.

For example, as regards measurement of a distance between two vehicles, both of which have a communication device, when own vehicle tries to measure a distance to the other vehicle, the own vehicle transmits a search signal to the other vehicle, and then receives a response signal from the other vehicle. As a result, the distance is measured from a time difference between the transmission and the receipt.

However, in the case of the communication method described above, the vehicles on roads may not be able to communicate with each other even within reaching distance of waves. The vehicle receives several overlapped waves coming through various paths as a result of reflection and diffraction from buildings, and the like.

This is so called multipath propagation, which exerts a significant influence upon the distance measurement.
In addition, received waves between driving mobile bodies are influenced by fading caused by a surface of the road.

Thus, it was difficult to determine a true value of measured distance with high accuracy because of multipath and fading.

From Electronics & Communications in Japan, Part I - Communications, US, Scripta Technica, New York (01-12-1996), 79(12), 106-115 a vehicle-to-vehicle communications and ranging system is known which is able to perform communications and ranging simultaneously using spread spectrum techniques. In this system, a vehicle A can obtain information on another vehicle B by spread spectrum demodulation based on information calculated and retransmitted by vehicle B in response to a pseudo noise (PN) signal transmitted by vehicle A. The distance between the vehicles A and B can be measured by detecting the phase difference of the sent and received PN signals. Vehicle A transmits its own PN signal while vehicle B adds an identification information to the PN signal received before sending it back to vehicle A. Thus, vehicle A can obtain information on vehicle B and simultaneously on the distance between the vehicles. The known communications and ranging system is able to perform bidirectional communications and rangings.

The system known from EP 0 964 380 A2 allows communication and distance measuring even if more than two mobile bodies are involved. Each mobile body is provided with a wireless communication device periodically transmitting an identification broadcast which includes identification information peculiar to the mobile body. On detection of a predetermined event, for example the actuation of a turning indicator switch of one of said mobile bodies, this mobile body starts measuring the distances from the other mobile bodies whose information broadcasts it has received. Said one detection side mobile body decides on the receiving strength of the information broadcast received from the other non-detection side mobile bodies an order of distances. Thereafter the detection side mobile body transmits in sequence request broadcasts to the other mobile bodies which in turn transmit reply broadcasts. Each of the request broadcasts and the reply broadcasts includes identification information both of the detecting side mobile body and one of the non-detecting side mobile bodies. The detection side mobile body determines in sequence the distances to the non-detection side mobile bodies.

It is an object of the invention to provide a method for periodically measuring a distance between each mobile body of a plurality of such bodies and another body of this plurality. The method is to improve accuracy of the distance measurement between the mobile bodies by minimizing the influence of multipath and fading.

According to the invention, a communication method is provided for measuring a distance between mobile bodies each being equipped with a wireless communication device measuring a distance between said mobile bodies using a spread spectrum method, wherein said communication method comprises the steps of:
a) periodically transmitting from said communication device of each mobile body an identification broadcast including identification information peculiar to said mobile body,
b) transmitting a request broadcast from said communication device of a first one of said mobile bodies in response to the receipt of said identification broadcast of a second one of said mobile bodies, said first request broadcast including the identification information both of said first and said second mobile bodies,
c) transmitting a first reply broadcast from said communication device of said second mobile body in response to the receipt of said first request broadcast, said first reply broadcast including identification information both of said first and said second mobile bodies,
d) measuring the distance between said first and said second mobile bodies with said communication device of said first mobile body using the spread spectrum method based on said first request broadcast and said first reply broadcast,
e) transmitting a second request broadcast from said communication device of said second mobile body in response to the receipt of said first request broadcast, said second request broadcast including identification information both of said first and said second mobile bodies,
f) transmitting a second reply broadcast from said communication device of said first mobile body in response to the receipt of said second request broadcast, said second reply broadcast including identification information both of said first and said second mobile bodies,
g) measuring the distance between said first and said second mobile bodies with said communication device of said second mobile body using the spread spectrum method based on said second request broadcast and said second reply broadcast, and
h) after having transmitted said first request broadcast from said first mobile body in accordance with step b) of the communication method not transmitting said first request broadcast in response to the receipt of the next one of said periodically transmitted identification broadcasts of said second mobile body.

The spread spectrum method is a communication method in which receiving side (measuring side) receives a spread signal from transmitting side and spreads it reversely to obtain correlation output. In this method, because a relative distance is calculated from a peak value of the correlation output obtained at the measuring side and time at a reference point, influence of multipath and fading is minimized resulting in improvement in accuracy of measuring distance between mobile bodies.

Integrating a distance-measuring function into a spread spectrum data communication device eliminates the need for equipping a separate distance-measuring unit additionally and enables us to miniaturize the device. This also enables sharing of an antenna and a communication protocol facilitating simple device configuration.

Because the communication waves by means of the spread spectrum method includes identification information peculiar to the mobile body, the mobile bodies can identify each other. If distances to two or more mobile bodies are measured, a relative distance to each identified mobile body can be measured, and thereby it is possible to know relative positions of two or more mobile bodies exactly.

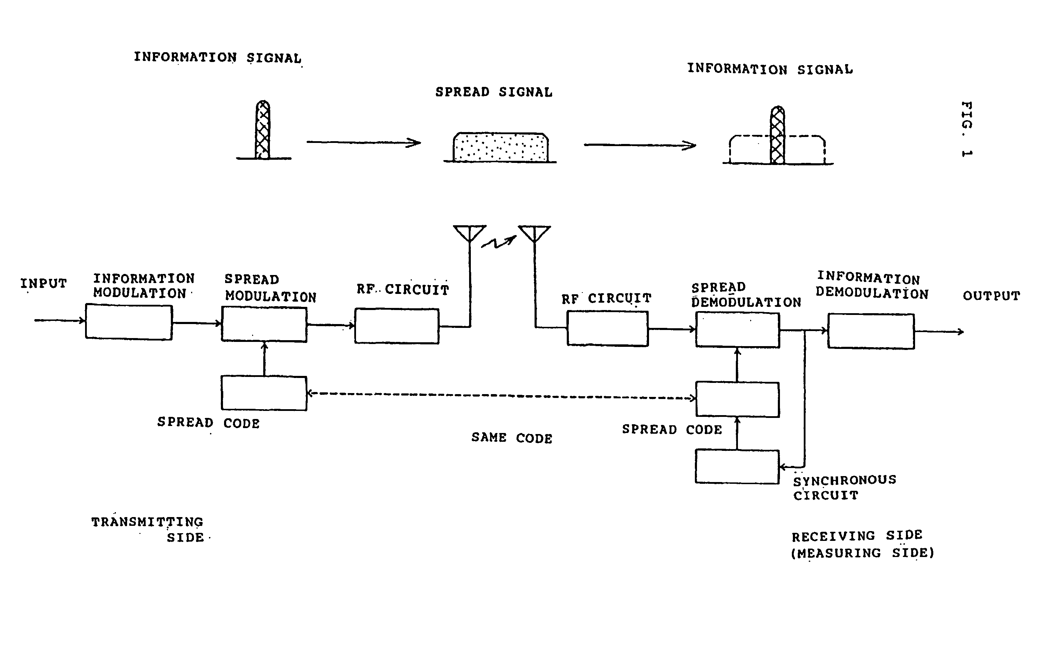

The following describes one embodiment of the present invention with reference to FIGS. 1 to 4.
It is illustrated in:
FIG. 1:
   A diagram illustrating a basic structure of communication by means of spread spectrum method in accordance with an embodiment of the present invention;
FIG. 2:
   An explanatory diagram illustrating signals for explaining a principle of distance measurement;
FIG. 3:
   A diagram illustrating communication control procedures when measuring a distance by means of SS communication method; and
FIG. 4:
   A schematic plan view illustrating an example of driving conditions of vehicles.

FIG. 1 shows a basic configuration of communication by means of Spread Spectrum (hereinafter referred to as SS), what is called SS communication method, according to the embodiment.

On transmitting side, input information is information-modulated into a narrow-band information signal in a similar way to conventional communication methods. The narrow-band information signal is then spread-modulated using spread code (PN (Pseudo random Noise) code).

This spread modulation spreads a signal band of the narrow-band information signal from several hundred times to several thousand times, and a RF circuit transmits the signal as a spread signal.

On the other hand, receiving side (measuring side) receives the spread signal, which is spread-demodulated (operation for reconstructing the spread signal) using the same spread code as that on the transmitting side to obtain a narrow-band information signal. The narrow-band information signal is then demodulated and output. Contents of communication are judged from the output information.

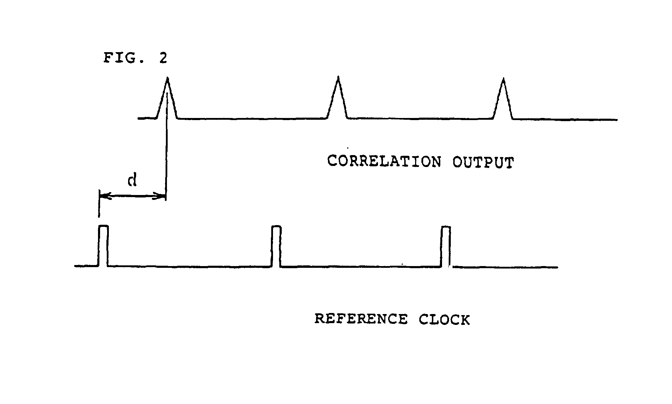

The outline of the SS communication method is described above. A relative distance between mobile bodies can be measured by this SS communication method. In other words, as a result of the processing in which the receiving side receives and spread-demodulates a spread signal that is transmitted from the transmitting side, correlation output with a constant period is obtained. Based on the principle that a phase difference d between this relative output and a reference clock on the measuring side is proportional to a distance between the transmitting side and the receiving side as shown in FIG. 2, the relative distance between both mobile bodies can be determined by this phase difference d.

It should be noted that, in order to make a phase difference d proportional to a distance between both mobile bodies, the same spread code as that on the transmitting side is required when the spread signal is spread-demodulated on the measuring side. The phase difference is spread demodulated on the measuring side using the spread code synchronized by a synchronous circuit.

As described above, the SS communication method provides measurement of a distance between both mobile bodies as well as information conveyance.

As regards the spread signal received on the measuring side, interference and noise added during propagation are eliminated at the time of spread demodulation because the interference and the noise are not proportional to the spread code.

Therefore, during the SS communication between the mobile bodies such as vehicles, it is possible to minimize influence of multipath and fading so that a distance between the mobile bodies can be measured with high accuracy.

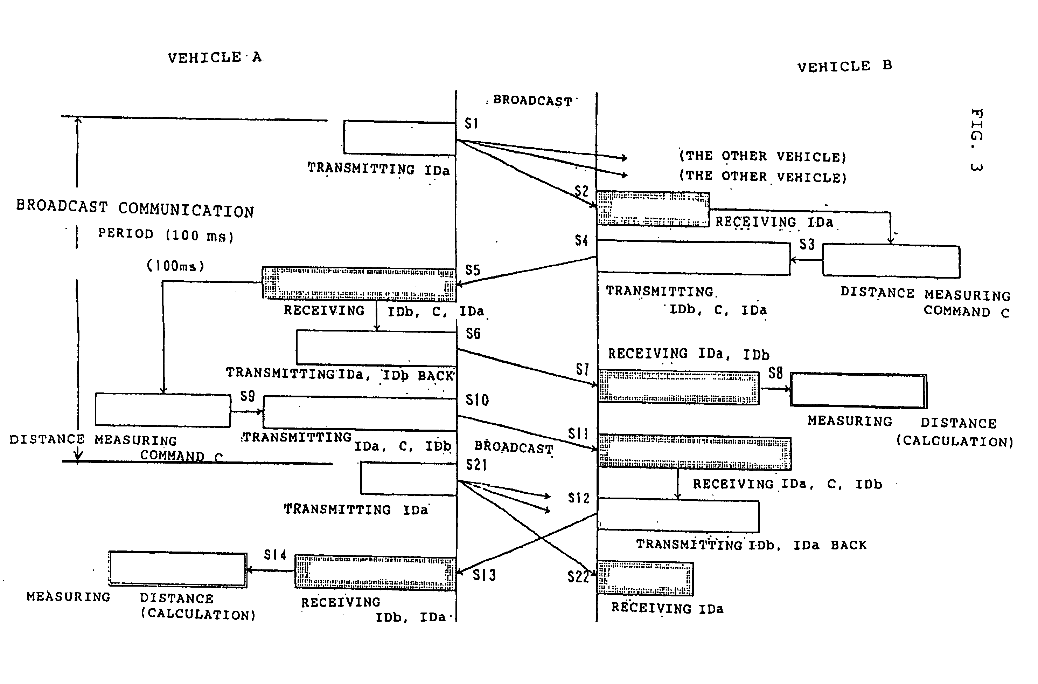

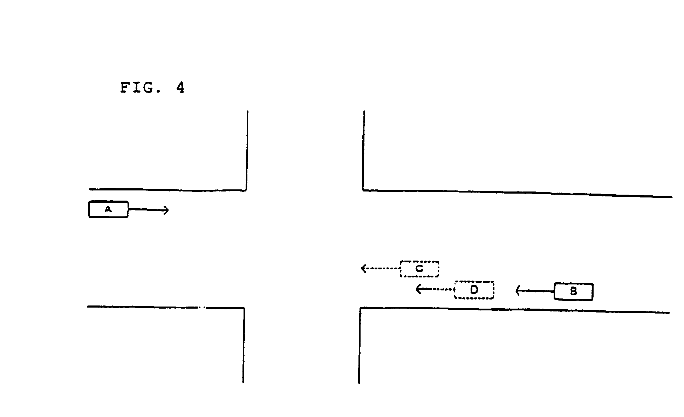

An example of communication control procedures used in actual distance measurement is described with reference to FIGS. 3 and 4, where each vehicle is equipped with a wireless communication device for transmitting and receiving to which the SS communication method described above is applied.

The wireless communication device equipped on each vehicle performs broadcast every 100 ms (millisecond) using output that provides a receivable area with a radius of up to about 400 meters. In addition, an identification information ID of own vehicle is added to the broadcast before transmission.

FIG. 3 shows a communication control procedure for communication between vehicle A and B. From each wireless communication device of the vehicle A and B, own vehicle identification information IDa and IDb are transmitted as broadcast communication respectively.

As an actual situation, for example, as shown in FIG. 4, it is assumed that the vehicle A is driving from the left side toward an intersection, and that on the other hand from the opposite lane the vehicle B is also driving toward the intersection.

In this situation, a broadcast with own vehicle identification information IDa is transmitted from the vehicle A (step S1). When the vehicle B receives the broadcast (step S2), a distance measuring command C for requesting a reply required to measure a distance is added to the broadcast (step S3), and then the vehicle B transmits the broadcast with the own vehicle identification information IDb and the other vehicle identification information IDa (step S4).

When the vehicle A receives the broadcast (step S5), the vehicle A transmits the broadcast back with both of identification information IDa and IDb (step S6).

When the vehicle B receives this reply (step S7), a relative distance between the vehicle A and the vehicle B is calculated from the received spread signal as described above (step S8).

Thus, on the vehicle B side, influence of multipath and fading is minimized by the SS communication method, and thereby a distance to the vehicle A is measured with high accuracy.

On the other hand, when the vehicle A receives IDb, C, and IDa in step S5, the vehicle A adds a distance measuring command C to them (step S9), and then the distance measuring command C is transmitted with the own vehicle identification information IDa and the other vehicle identification information IDb (step S10). The vehicle B receives them (step S11), and transmits them back with both of identification information IDa and IDb (step S12).

The vehicle A receives this reply (step S13), calculates a distance to the vehicle B from the received spread signal (step S14), and thereby a distance to the vehicle B is measured with high accuracy on the vehicle A side.

In the case of this example, because 100 ms (a broadcast communication period) has passed until the reply is received in step S13, the next broadcast is transmitted with own vehicle identification information IDa before receiving the reply (step S21).

The vehicle B, therefore, receives the broadcast again (step S22), and the control described above is repeated thereafter. Both of the vehicles A and B repeatedly measure a relative distance each other.

Judging from the distances measured in succession, it is easy to determine whether the other vehicle is coming nearer or going away. In the situation shown in FIG. 4, the vehicles A and B can know they are approaching to each other. Therefore, the vehicle A or B never misses the other vehicle and is given a warning especially when turning to the right.

The above example describes the case where one vehicle B exists within a 400-meter radius of the vehicle A. As shown in FIG. 4 by dashed lines, for example, there is a case where two or more vehicles B, C, D, ... exist in proximity to the vehicle A. In this case, the vehicle, which has measured a distance by transmitting a distance measuring command C in response to a broadcast transmitted every 100 ms, does not reply to the vehicle A after transmitting a distance measuring command C in response to the next broadcast. Instead, the vehicle replies to a distance measuring command C transmitted by another vehicle, and thereby can measure the distance to another vehicle.

In this manner, distances to the vehicle B, C, D ... is measured in succession. After distances to all vehicles are measured, a distance to the vehicle that has been measured once is measured again in succession. As a result, distances to all vehicles in proximity of the vehicle A can be measured.

In the situation shown in FIG. 4, therefore, the vehicle A can know how many vehicles in the opposite lane are approaching to the intersection, and can take notice so that the vehicle A never misses a vehicle especially when turning to the right.

Because a relative distance between the vehicles driving each other is measured by means of the SS communication method as described above, the influence of multipath and fading is minimized, and thereby a distance between both vehicles can be measured with high accuracy.

Also, even if at least one of the two vehicles stops, a relative distance between both vehicles can be measured with high accuracy by means of the SS communication method as a matter of course.

It is possible to integrate a distance-measuring function into a SS data communication device. This eliminates the need for equipping a separate distance-measuring unit additionally, and enables us to miniaturize the device. This also enables sharing of an antenna and a communication protocol facilitating simple device configuration.

In summary it is an object to provide a method for measuring a distance between mobile bodies, which improves accuracy of the distance measurement between the mobile bodies by minimizing influence of multipath and fading, and which enables us to miniaturize a communication device.

It is provided a communication method for measuring a distance between mobile bodies, wherein regarding a communication method applied to communication between a plurality of mobile bodies using a wireless communication device equipped on each of the mobile bodies, the wireless communication device measures a distance between the mobile bodies by communication using spread spectrum method.

## Claims

1. A communication method for measuring a distance between mobile bodies (A-D) each being equipped with a wireless communication device measuring a distance between said mobile bodies (A-D) using a spread spectrum method, wherein said communication method comprises the steps of:
a) periodically transmitting (steps S1, S2) from said communication device of each mobile body (A-D), an identification broadcast including identification information (IDₐ - ID_{d}) peculiar to said mobile body (A-D),
b) transmitting (steps S4, S5) a first request broadcast (ID_{b}, C, IDₐ) from said communication device of a first (B) one of said mobile bodies (A-D) in response to the receipt of said identification broadcast of a second (A) one of said mobile bodies (A-D), said first request broadcast (ID_{b}, C, IDₐ) including identification information (IDₐ, ID_{b}) both of said first (B) and said second (A) mobile bodies,
c) transmitting (steps S6, S7) a first reply broadcast (IDₐ, ID_{b}) from said communication device of said second mobile body (A) in response to the receipt of said first request broadcast (ID_{b}, C, IDₐ), said first reply broadcast (IDₐ, ID_{b}) including identification information both of said first (B) and said second (A) mobile bodies,
d) measuring (step 8) the distance between said first (B) and said second (A) mobile bodies with said communication device of said first mobile body (B) using the spread spectrum method based on said first request broadcast (ID_{b}, C, IDₐ) and said first reply broadcast (IDₐ, ID_{b}),
e) transmitting (steps S10, S11) a second request broadcast (IDₐ, C, ID_{b}) from said communication device of said second mobile body (A) in response to the receipt of said first request broadcast (ID_{b}, C, IDₐ), said second request broadcast (IDₐ, C, ID_{b}) including identification information both of said first (B) and said second (A) mobile bodies,
f) transmitting (steps S12, S13) a second reply broadcast (ID_{b}, IDₐ) from said communication device of said first mobile body (B) in response to the receipt of said second request broadcast (IDₐ, C, ID_{b}), said second reply broadcast (ID_{b}, IDₐ) including identification information both of said first (B) and said second (A) mobile bodies,
g) measuring (step S14) the distance between said first (B) and said second (A) mobile bodies with said communication device of said second mobile body (A) using the spread spectrum method based on said second request broadcast (IDₐ, C, ID_{b}), and said second reply broadcast (ID_{b}, IDₐ), and
h) after having transmitted said first request broadcast (ID_{b}, C, IDₐ) from said first mobile body (B) in accordance with step b) of the communication method not transmitting said first request broadcast (ID_{b}, C, IDₐ) in response to the receipt of the next one of said periodically transmitted identification broadcasts of said second mobile body (A).

## Patentansprüche

1. Kommunikationsverfahren zum Messen eines Abstandes zwischen mobilen Körpern (A-D), die jeweils mit einer Funkkommunikationsvorrichtung ausgestattet sind, die einen Abstand zwischen den mobilen Körpern (A-D) unter Verwendung eines Spreizspektrumverfahrens misst, wobei das Kommunikationsverfahren die Schritte umfasst:
a) periodisches Senden (Schritte S1, S2) einer Identifikationsausstrahlung, die für den mobilen Körper (A-D) spezifische Identifikationsinformationen (IDₐ-ID_{d}) enthält, von der Kommunikationsvorrichtung des jeweiligen mobilen Körpers (A-D),
b) Senden (Schritte S4, S5) einer ersten Anfrageausstrahlung (ID_{b}, C, IDₐ) von der Kommunikationsvorrichtung eines ersten (B) der mobilen Körper (A-D) in Reaktion auf den Empfang der Identifikationsausstrahlung eines zweiten (A) der mobilen Körper (A-D), wobei die erste Anfrageausstrahlung (ID_{b}, C, IDₐ) Identifikationsinformationen (IDₐ, ID_{b}) sowohl des ersten (B) als auch des zweiten (A) mobilen Körpers enthält,
c) Senden (Schritte S6, S7) einer ersten Antwortausstrahlung (IDₐ, ID_{b}) von der Kommunikationsvorrichtung des zweiten mobilen Körpers (A) in Reaktion auf den Empfang der ersten Anfrageausstrahlung (ID_{b}, C, IDₐ), wobei die erste Antwortausstrahlung (IDₐ, ID_{b}) Identifikationsinformationen sowohl des ersten (B) als auch des zweiten (A) mobilen Körpers enthält,
d) Messen (Schritt 8) des Abstands zwischen dem ersten (B) und dem zweiten (A) mobilen Körper mit der Kommunikationsvorrichtung des ersten mobilen Körpers (B) unter Verwendung des Spreizspektrumverfahrens auf der Grundlage der ersten Anfrageausstrahlung (ID_{b}, C, IDₐ) und der ersten Antwortausstrahlung (IDₐ, ID_{b}),
e) Senden (Schritte S10, S11) einer zweiten Anfrageausstrahlung (IDₐ, C, ID_{b}) von der Kommunikationsvorrichtung des zweiten mobilen Körpers (A) in Reaktion auf den Empfang der ersten Anfrageausstrahlung (ID_{b}, C, IDₐ), wobei die zweite Anfrageausstrahlung (IDₐ, C, ID_{b}) Identifikationsinformationen sowohl des ersten (B) als auch des zweiten (A) mobilen Körpers enthält,
f) Senden (Schritte S12, S13) einer zweiten Antwortausstrahlung (ID_{b}, IDₐ) von der Kommunikationsvorrichtung des ersten mobilen Körpers (B) in Reaktion auf den Empfang der zweiten Anfrageausstrahlung (IDₐ, C, ID_{b}), wobei die zweite Antwortausstrahlung (ID_{b}, IDₐ) Identifikationsinformationen sowohl des ersten (B) als auch des zweiten (A) mobilen Körpers enthält,
g) Messen (Schritt 14) des Abstands zwischen dem ersten (B) und dem zweiten (A) mobilen Körper mit der Kommunikationsvorrichtung des zweiten mobilen Körpers (A) unter Verwendung des Spreizspektrumverfahrens auf der Grundlage der zweiten Anfrageausstrahlung (IDₐ, C, ID_{b}) und der zweiten Antwortausstrahlung (ID_{b}, IDₐ), und
h) nach dem Senden der ersten Anfrageausstrahlung (ID_{b}, C, IDₐ) vom ersten mobilen Körper (B) entsprechend dem Schritt b) des Kommunikationsverfahrens, Nicht-Senden der ersten Anfrageausstrahlung (ID_{b}, C, IDₐ) in Reaktion auf den Empfang der nächsten der periodisch gesendeten Identifikationsausstrahlungen des zweiten mobilen Körpers (A).

## Revendications

1. Procédé de communication pour mesurer une distance entre des corps mobiles (A-D) équipés chacun d'un dispositif de communication sans fil mesurant une distance entre lesdits corps mobiles (A-D) en utilisant un procédé d'étalement de spectre, dans lequel ledit procédé de communication comprend les étapes consistant à :
a) émettre périodiquement (étapes S1, S2), à partir dudit dispositif de communication de chaque corps mobile (A-D), une diffusion d'identification comprenant des informations d'identification (IDₐ - ID_{d}) propres audit corps mobile (A-D),
b) émettre (étapes S4, S5) une première diffusion de requête (ID_{b}, C, IDₐ) à partir dudit dispositif de communication d'un premier (B) desdits corps mobiles (A-D) en réponse à la réception de ladite diffusion d'identification d'un deuxième (A) desdits corps mobiles (A-D), ladite première diffusion de requête (ID_{b}, C, IDₐ) comprenant des informations d'identification (IDₐ, ID_{b}) à la fois desdits premier (B) et deuxième (A) corps mobiles,
c) émettre (étapes S6, S7) une première diffusion de réponse (IDₐ, ID_{b}) à partir dudit dispositif de communication dudit deuxième corps mobile (A) en réponse à la réception de ladite première diffusion de requête (ID_{b}, C, IDₐ), ladite première diffusion de réponse (IDₐ, ID_{b}) comprenant des informations d'identification à la fois desdits premier (B) et deuxième (A) corps mobiles,
d) mesurer (étape S8) la distance entre lesdits premier (B) et deuxième (A) corps mobiles, ledit dispositif de communication dudit premier corps mobile (B) utilisant le procédé d'étalement de spectre, sur la base de ladite première diffusion de requête (ID_{b}, C, IDₐ) et de ladite première diffusion de réponse (IDₐ, ID_{b}),
e) émettre (étapes S10, S11) une deuxième diffusion de requête (IDₐ, C, ID_{b}) à partir dudit dispositif de communication dudit deuxième corps mobile (A) en réponse à la réception de ladite première diffusion de requête (ID_{b}, C, IDₐ), ladite deuxième diffusion de requête (IDₐ, C, ID_{b}) comprenant des informations d'identification à la fois desdits premier (B) et deuxième (A) corps mobiles,
f) émettre (étapes S 12, S13) une deuxième diffusion de réponse (ID_{b}, IDₐ) à partir dudit dispositif de communication dudit premier corps mobile (B) en réponse à la réception de ladite deuxième diffusion de requête (IDₐ, C, ID_{b}), ladite deuxième diffusion de réponse (ID_{b}, IDₐ) comprenant des informations d'identification à la fois desdits premier (B) et deuxième (A) corps mobiles,
g) mesurer (étape S14) la distance entre lesdits premier (B) et deuxième (A) corps mobiles, ledit dispositif de communication dudit deuxième corps mobile (A) utilisant le procédé d'étalement de spectre, sur la base de ladite deuxième diffusion de requête (IDₐ, C, ID_{b}) et de ladite deuxième diffusion de réponse (ID_{b}, IDₐ), et
h) après avoir émis ladite première diffusion de requête (ID_{b}, C, IDₐ) à partir dudit premier corps mobile (B) conformément à l'étape b) du procédé de communication, ne pas émettre ladite première diffusion de requête (ID_{b}, C, IDₐ) en réponse à la réception de la suivante desdites diffusions d'identification émises périodiquement dudit deuxième corps mobile (A).
